# FASCICULE DE BREVET EUROPEEN

(11) **EP 1 931 826 B1**
(45) Date de publication et mention de la délivrance du brevet: **20.06.2012**
(21) Numéro de dépôt: 06808120.7
(22) Date de dépôt: 13.09.2006
(51) Int. Cl.: D21H 17/02, D21H 17/45, D21H 17/52, D21H 17/29, D21H 21/02, D21H 21/52, D21H 11/14

(54) **SYSTÈME PAPETIER POUR LA DIMINUTION DES DÉPÔTS ET ENCRASSEMENTS SUR MACHINE AU COURS DE LA FABRICATION DE PAPIERS ET CARTONS**
PAPIERSYSTEM ZUR MINDERUNG VON ABSCHEIDUNGEN UND VERSTOPFUNGEN AUF EINER MASCHINE BEI DER PAPIER- UND KARTONHERSTELLUNG
PAPER SYSTEM FOR REDUCING DEPOSITS AND CLOGGING ON A MACHINE DURING PAPER AND CARDBOARD MANUFACTURE

(30) Priorité: 13.09.2005 FR 0509299
(43) Date de publication de la demande: 18.06.2008
(73) Titulaire: Gomez, Daniel, 38000 Grenoble (FR)
(72) Inventeur: Gomez, Daniel, 38000 Grenoble (FR)
(86) Numéro de dépôt international: PCT/FR2006/002094
(87) Numéro de publication internationale: WO 2007/031642

(56) Documents cités:
- EP-A- 0 644 293
- EP-A- 0 645 491
- EP-B- 0 050 316
- FR-A- 2 624 531

## Description

### DOMAINE DE L'INVENTION

La présente invention concerne une nouvelle solution technique pour résoudre le problème technique de la diminution des dépôts organiques et des encrassements sur machine à l'origine de nettoyages, d'arrêts et de casses au cours de la fabrication des papiers et cartons, surtout quand on fait appel à des pâtes fibreuses contenant ou constituées de fibres recyclées.

A cet effet, elle préconise un système végétal micronisé en tant que produit industriel nouveau, son procédé de préparation et son utilisation dans le domaine de la fabrication de papiers et cartons, en particulier quand on fait appel à une pâte fibreuse contenant ou constituée de fibres recyclées.

### ART ANTERIEUR

La fabrication de papier et carton fait appel à un ensemble de matières premières, naturelles, minérales et synthétiques. Ces matières sont essentiellement des fibres cellulosiques de résineux et/ou de feuillus, de plantes annuelles, de sous-produits de l'industrie du bois, soumises à un traitement chimique de délignification suivi ou non par une opération de blanchiment pour la fabrication de pâtes chimiques écrues ou blanchies. Ces matières peuvent également faire l'objet de traitements mécaniques sous pression, avec ou sans traitement chimique, avec ou sans blanchiment, pour la fabrication de pâtes mécaniques, thermomécaniques ou chimico-thermomécaniques qui sont écrues ou blanchies.

La fabrication du papier et carton fait aussi appel à divers adjuvants classiques bien connus de l'industrie papetière, comme par exemple :
● les charges minérales (notamment le talc, le carbonate de calcium, le kaolin et l'oxyde de titane) ou organiques (notamment la poudre de bois),
● les agents de renforcement des résistances à l'état sec ou humide (résines naturelles ou synthétiques, polymères d'amidon ou synthétiques),
● les agents de collage et de rétention, notamment les polymères cationiques et anioniques directement introduits au niveau de la caisse de tête ou en amont de celle-ci, dans les eaux de fabrication ou dans la suspension fibreuse, pour tenter de réduire l'encrassement des habillages, et
● les agents fongicides, les émulsifants, les tensioactifs, les dispersants, les azurants optiques, les colorants minéraux, organiques et synthétiques et la silice colloïdale.

Le recyclage des papiers et cartons est un objectif important pour le respect des exigences environnementales afin de (i) mieux gérer les forêts, et (ii) répondre aux nouvelles obligations du développement durable. Pour cela, la fabrication des papiers et cartons fait de plus en plus appel à des fibres de récupération. Ainsi pour les papiers à usages graphiques, les fibres de récupération sont utilisées après traitement de désencrage suivi, le cas échéant, par des technologies de blanchiment bien connues de la personne du métier, afin de conférer à la matière fibreuse recyclée le niveau de blancheur exigé pour les propriétés d'aspect du papier. Les fibres recyclées peuvent être utilisées seules ou en mélange avec des pâtes vierges, chimiques, mécaniques ou thermomécaniques provenant de résineux ou de feuillus.

On sait que l'industrie papetière utilise également des additifs végétaux micronisés de faible densité, de faibles surfaces spécifiques physique et hydraulique, fabriquées à partir de sous-produits des industries du bois, du sciage ou de la production agricole, pour l'amélioration de la productivité et de la qualité des papiers et cartons. Voir à cet effet les demandes de brevet publiées FR 2 624 531 A, EP 0 645 491 A et EP 0 644 293 A.

FR 2 624 531 A et son correspondant européen EP 0 344 265 A décrivent des procédés pour (i) diminuer la densité, (ii) augmenter le bouffant et la porosité, et (iii) accélérer l'égouttage et le séchage des papiers et cartons au moyen d'une charge végétale ayant une granulométrie, une surface spécifique physique et une surface spécifique hydraulique faibles. En particulier, la description de FR 2 624 531 (voir page 18 lignes 18-23) enseigne, pour la fabrication de papiers, que cette charge végétale est introduite dans la masse avant floculation : (a) on prépare par mélange une suspension aqueuse contenant des fibres, ladite charge végétale et un liant organique (qui est en général anionique), puis (b) l'ajout d'un floculant cationique déstabilise ladite suspension et provoque la floculation de l'ensemble au niveau de la caisse de tête. Cette façon de procéder permet d'augmenter la liaison fibres-charge en vue d'améliorer les résistances mécaniques, en revanche elle ne permet pas de cationiser la charge végétale au moyen du floculant cationique afin de fixer des contaminants (provenant notamment des fibres recyclées et le cas échéant de la charge végétale, quand celle-ci résulte de la micronisation de déchets de bois ou de sous-produits de l'exploitation agricole).

EP 0 645 491 A et EP 0 644 293 A décrivent la fabrication de papiers à partir d'un mélange de fibres recyclées, d'un agent liant et d'une charge végétale finement divisée (issue de déchets de céréales ou de raisins pressés, selon EP 0 645 491 A, ou de résidus de pulpe de betteraves, selon EP 0644 293 A). EP 0 645 491 A indique en outre (voir page 2 ligne 57 à page 3 ligne 5, et exemple 1) que la sensibilité à l'eau de la charge végétale de ce mélange peut être réduite au moyen de colloïdes ou d'agglomérats, par exemple : des amidons, des amidons cationiques, des sels d'aluminium ou des agents de cationisation, et que les déchets de plantes, telles que les céréales, contenant de l'amidon peuvent être cationisés.

Eu égard à l'enseignement de l'art antérieur précité, il est clair que le floculant cationique, selon 2 624 531 A, et l'amidon cationique, selon EP 0 645 491 A, sont toujours introduits dans le mélange fibres + charge végétale. En conséquence, l'art antérieur ne décrit ni ne suggère le mélange préalable de la charge avec une substance polymère cationique avant la réalisation de la suspension fibres + charge végétale associée à la substance polymère cationique, selon l'invention.

Pour la chimie de la partie humide, l'industrie papetière propose des additifs chimiques spéciaux et/ou des polymères synthétiques pour l'amélioration de certaines propriétés des papiers et cartons (main, accélération de l'égouttage, de la formation etc...) et pour le traitement des eaux blanches afin de réduire les encrassements, la prolifération de dépôts biologiques ou slimes. Ces dépôts se forment dans les eaux du procédé, encrassent les habillages, affectent la productivité, la qualité et peuvent être aussi à l'origine de contamination du papier (présence de tâches, points noirs, propreté microbiologique).

La réduction ou la suppression de ces dépôts est une opération fondamentale pour l'optimisation de la marche de la machine et l'amélioration de la performance industrielle.

Pendant de nombreuses années, les usines recyclant les papiers et cartons récupérés ont produit avec des circuits d'eau relativement ouverts et des quantités de rejets liquides relativement importantes. Les règlements en matière de rejets aqueux de plus en plus restrictifs avec notamment la mise en place de la directive européenne IPPC (Integrated Pollution Prevention and Control) et le besoin d'optimiser l'utilisation de la matière première, ont conduit la plupart des usines papetières à fermer partiellement ou totalement leurs circuits pour réduire le volume des rejets et les impacts environnementaux. La fermeture des circuits et la réduction de la quantité d'eau fraîche nécessaire à la fabrication des papiers et cartons présentent de nombreux avantages pour les usines (réduction des pertes en fibres, fines, charges, réduction de la consommation de produits chimiques, d'énergie, conformité en matière d'environnement) mais elle entraîne cependant un changement non négligeable de la qualité des eaux du procédé avec une augmentation sensible des matières dissoutes.

En effet, lors de la remise en pâte, les additifs hydrosolubles ou hydrodispersables passent en solution et ils sont soit dissous, soit dispersés sous forme de très petites particules de taille submicronique formant des colloïdes soit anioniques (en général) soit non ioniques. Les colloïdes anioniques sont identifiés par la mesure de la demande cationique. Ils sont précipitables par déstabilisation physico-chimique. Leur ré-agglomération provoque des dépôts collants dans la partie humide de la machine à papier. Les colloïdes non ioniques peuvent être réagglomérés lors du séchage et provoquer des dépôts collants en sécherie. Ces problèmes de contamination sont particulièrement sensibles lors de la fabrication de papiers pour ondulé faisant en général appel à des taux importants de fibres de récupération dont certaines en provenance d'emballages ménagers recyclés (EMR). La bibliographie nous indique qu'il existe différentes sortes de substances gênantes à l'origine de problèmes de productivité et de qualité et notamment lors de la fabrication de papiers avec fibres de récupération. Ces substances sont : les sels (carbonate de calcium, sulfates, chlorures...), les colloïdes organiques (stickies, poix, résines, colles). La présence de stickies (additifs très fragmentés dès la remise en pâte, de petites dimensions, particules collantes liées à l'emploi de liants organiques et synthétiques comme les latex, le PVA et les amidons) provoque des agglomérats collants à l'origine d'encrassements des habillages (en particulier au niveau des toiles et des feutres) avec des casses répétitives sur machine, des arrêts pour nettoyage, et des problèmes de qualité du produit fini (tâches).

Il existe certes différentes techniques pour diminuer ou éliminer les produits impropres à la fabrication du papier affectant la productivité et la qualité. Les impuretés de dimension supérieure à 70 µm présentes dans le pulpeur dès la remise en suspension de la pâte, peuvent être éliminés par des procédés mécaniques comme le classage et l'épuration fine. Certaines matières dissoutes dans les eaux peuvent être neutralisées par des particules minérales (talc micronisé). Il existe également des méthodes de complexage du calcium pour éviter les dépôts de carbonate de calcium. Les papetiers sont aussi familiarisés avec les traitements anti-slimes. Ces problèmes d'encrassements sont essentiellement notables pour la fabrication des papiers pour ondulé, des papiers magazine (LWC), des cartons mono ou multi-jets faisant appel à des taux de plus en plus importants, voir à 100 %, de fibres de récupération. La bibliographie papetière précise que pour augmenter la fermeture des circuits d'eau tout en gardant la même productivité sans affecter la qualité, il est nécessaire d'intégrer dans les circuits, des éléments ou traitements chimiques spécifiques pour éliminer une partie des contaminants contenus dans les eaux. Pour cela, les papetiers font appel à différentes technologiqes pour purger les circuits des éléments indésirables (matières organiques dissoutes) comme par exemple des reins qui sont des procédés d'évaporation et de cristallisation à froid capables de purger aussi bien les matières organiques que les sels dissous. Ces traitements mettent en oeuvre des technologies lourdes et coûteuses qui n'offrent pas toutes les garanties de performances au niveau de la décontamination des eaux pour la réduction souhaitée des dysfonctionnements sur machine (encrassements et arrêts pour nettoyage) affectant les coûts de production et la qualité. Les limites acceptables de la fermeture des circuits varient avec le type de production et les matières premières utilisées. Les consommations spécifiques d'eau peuvent approximativement varier de 3-5 m³/tonne pour la fabrication de papier pour carton ondulé et pour le carton plat mono- ou multi-jets, de 10-12 m³/tonne pour celle du papier journal, de 5-7 m³/tonne pour le papier à usage domestique et sanitaire (pâtes vierges) et de 6-8 m³/tonne pour les papiers impression écriture. L'industrie papetière a également développé divers procédés et propose des additifs organiques et/ou synthétiques anioniques ou cationiques pour améliorer la rétention des matières organiques et synthétiques dissoutes dans les eaux blanches. Ces traitements sont biologiques, membranaires, physico-chimiques ou font appel à des techniques de coagulation/floculation/décantation ou flottation; utilisés seul ou en combinaison. Diverses mesures peuvent être effectuées pour caractériser cette contribution à la charge des eaux du procédé : matières en suspension (MES), demande chimique en oxygène DCO, demande cationique qui caractérise la charge anionique des matières dispersées.

### OBJET DE L'INVENTION

La présente invention préconise une nouvelle solution technique pour la diminution des dépôts organiques et des encrassements sur machine à l'origine d'arrêts et de casses au cours de la fabrication des papiers et cartons, surtout quand on met en oeuvre des fibres recyclées ou des mélanges de fibres papetières et de fibres recyclées..

Cette nouvelle solution met en oeuvre un système végétal dans lequel un additif végétal micronisé est associé à une substance polymère cationique.

Par «additif végétal» on entend ici une poudre cellulosique, c'est-à-dire un matériau qui est issu d'une matière végétale contenant de la cellulose. Par «additif végétal micronisé associé à une substance polymère cationique» on entend le fait qu'au moins une portion de la substance polymère cationique a été adsorbée par l'additif végétal micronisé, de façon que ledit additif végétal comporte des groupements cationiques. On peut ainsi dire que l'additif végétal est «activé» par ladite substance polymère cationique.

Selon un premier aspect de l'invention, on fournit un système papetier pour la diminution des dépôts, des encrassements et des casses au cours de la fabrication de papiers et cartons, notamment lorsque cette fabrication met en oeuvre des fibres recyclées ou un mélange de fibres papetières et de fibres recyclées, ledit système étant caractérisé en ce qu'il comprend un additif végétal micronisé préalablement associé à une substance polymère cationique choisie parmi l'ensemble constitué par les polymères cationiques, les copolymères cationiques et leurs mélanges, la dite substance polymère appartenant à la famille des polyacrylamides, polyamines, polyéthylèneimines, produits d'addition de dicyandiamide avec le formaldéhyde et/ou l'oxyde d'éthylène et leurs mélanges, ledit système étant destiné, lors de la fabrication de papiers et cartons, à être introduit en suspension aqueuse dans la suspension de fibres.

Selon un second aspect de l'invention, on fournit un procédé de préparation d'un tel système, ledit procédé étant caractérisé en ce qu'il comprend le traitement de l'additif végétal micronisé et ayant une humidité inférieure à 30 % et de préférence inférieure à 20 %, par mélange avec une substance polymère cationique sous agitation, la dite substance polymère cationique étant choisie parmi l'ensemble constitué par les polymères cationiques, les copolymères cationiques et leurs mélanges, la dite substance polymère cationique appartenant à la famille des polyacrylamides, polyamines, polyéthylèneimines, produits d'addition de dicyandiamide avec le formaldéhyde et/ou l'oxyde d'éthylène et leurs mélanges.

Selon un dernier aspect, on fournit une nouvelle utilisation dudit système, caractérisée en ce que l'on fait appel à un dit système pour la réduction des dépôts, encrassements et casses sur machine de production des papiers et cartons pouvant contenir des fibres recyclées et notamment des papiers pour ondulés, des papiers LWC, par adsorption et fixation des substances organiques, qui sont dissoutes ou hydrodispersées, et/ou des «stickies» (i. e. matières collantes) dans les eaux de fabrication.

### BREVE DESCRIPTION DES DESSINS

Dans les dessins annexés,

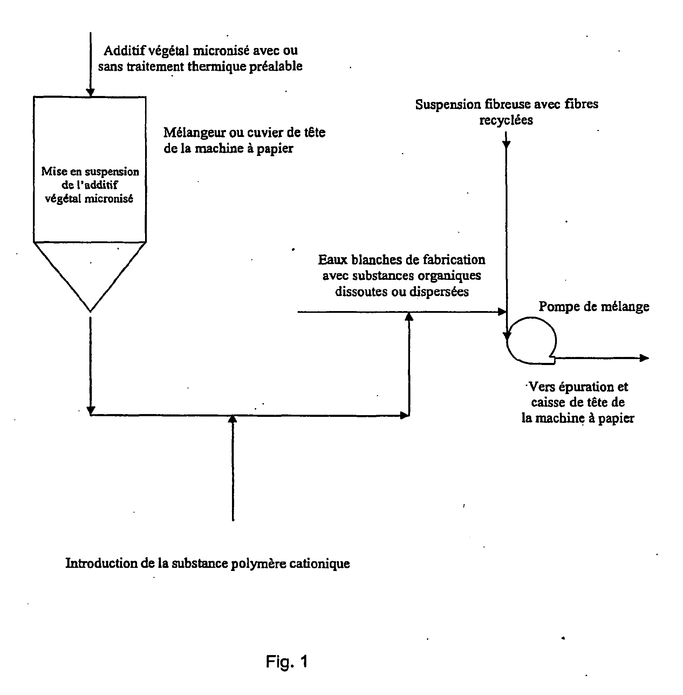

- la figure 1 illustre un mode particulier de réalisation de l'invention, dans lequel l'additif végétal micronisé est mis en suspension dans de l'eau (dans un mélangeur ou cuvier de tête de la machine à papier), on introduit dans la suspension ainsi réalisée la substance polymère cationique, puis introduit le mélange aqueux résultant dans la suspension de fibres contenant ou constituée de fibres recyclées ;

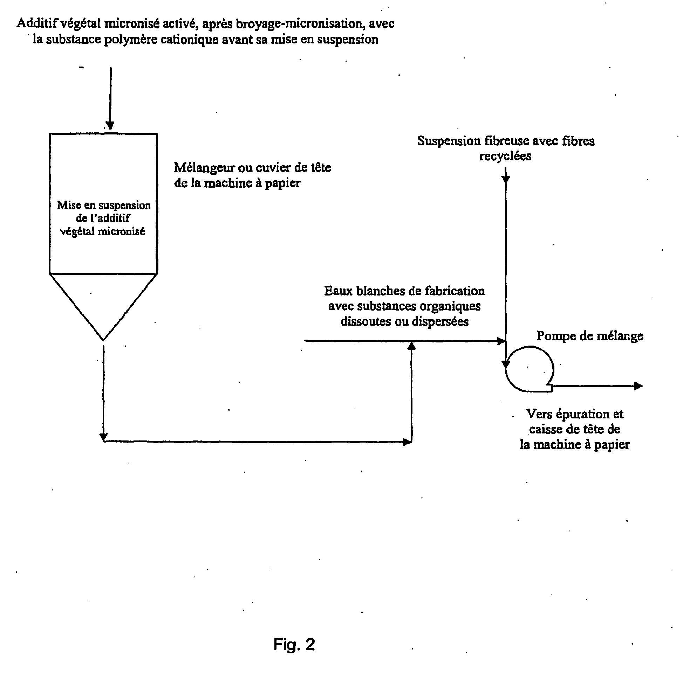

- la figure 2 illustre un autre mode particulier de réalisation de l'invention, dans lequel l'additif végétal, préalablement micronisé, est mis en contact à sec avec la substance polymère cationique pour être activé par celle-ci, le système papetier résultant est mis en suspension dans de l'eau puis introduit dans la suspension de fibres contenant ou constituée de fibres recyclées.

### DESCRIPTION DETAILLEE DE L'INVENTION

La nouvelle solution technique selon l'invention fait donc appel à un additif végétal micronisé, qui est écru ou blanchi. Cet additif végétal est «activé» par mise en contact, à sec ou en suspension aqueuse, avec une substance polymère cationique, le mélange résultant étant introduit dans la suspension aqueuse de fibres pouvant contenir des fibres recyclées.

La masse moléculaire de la substance polymère cationique est avantageusement comprise entre 10000 et 800000 selon les applications avant son introduction dans une suspension fibreuse contenant des fibres recyclées. Ladite substance polymère cationique intervient selon l'invention à une teneur comprise entre 0,05 et 5 kg/tonne d'additif végétal micronisé, de préférence une teneur de 0,1 à 2 kg/tonne d'additif végétal micronisé.

Le traitement de cationisation de l'additif végétal micronisé peut être réalisé soit directement sur l'additif végétal, après sa micronisation, par mise en contact à l'état sec avec la substance polymère cationique, soit par mise en contact à l'état humide après sa mise en suspension dans l'eau puis addition de la substance polymère cationique à la suspension résultante. Il est recommandé que dans chaque cas l'additif végétal utilisé ait, à sec (à 23 °C), une humidité (i. e. teneur totale en eau) inférieure à 30 % et de préférence inférieure à 20 %.

L'additif végétal est selon l'invention :
● de la poudre de bois micronisée provenant de résineux et/ou de feuillus,
● de la poudre de déchets de bois,
● de la poudre de sous-produits de l'exploitation agricole, notamment celle de céréales,
   ou
● un de leurs mélanges,
et a une granulométrie moyenne comprise entre 10 et 500 µm, de préférence une granulométrie moyenne comprise entre 10 et 350 µm.

L'additif végétal micronisé, peut être préalablement soumis à un traitement thermique avec de la vapeur sèche entre 100 et 180° C pour augmenter sa surface spécifique. En toute logique, il serait judicieux de parler de surface spécifique physique et de surface spécifique hydraulique, cependant comme ces deux surfaces spécifiques sont sensiblement voisines ou identiques, il est suffisant de ne retenir que le terme «surface spécifique». Le traitement par contact au moyen de la substance polymère cationique ou «activation cationique», avec éventuellement l'action thermique préalable, ont pour but de faciliter l'adsorption et la fixation de substances organiques dissoutes ou dispersées dans les eaux de fabrication de papiers et cartons avec fibres recyclées à l'origine de dépôts sur les habillages et d'encrassements sur machine avec perte de productivité en raison des casses et des arrêts pour nettoyage.

L'activation de l'additif végétal micronisé, écru ou blanchi, permet, d'une part, la réalisation d'un complexe dual ionique micronisé chimico-végétai (additif végétal/polymère cationique) pour la fixation des matières organiques dissoutes ou hydrodispersées dans les eaux blanches essentiellement anioniques, des stickies et des microstickies de taille inférieure à 70 µm non accessibles par les traitements chimiques classiques et, d'autre part, la fixation du complexe ainsi obtenu, eu égard à sa dimension et sa réactivité, dans les pores de la texture fibres/charge et son élimination par maintien dans la feuille de papier ou carton.

L'additif végétal micronisé est de préférence de la poudre de bois micronisée obtenu par broyage-micronisation à partir de sous-produits des industries du bois, du sciage. Il peut également provenir de sous-produits de la production agricole, notamment des céréales, par exemple il peut être obtenu par broyage de rafles de maïs. Comme indiqué plus haut, il a une teneur en humidité inférieure à 30 %, de préférence une humidité inférieure à 20 %, et une granulométrie se situant entre 10 et 500 µm et de préférence entre 10 et 350 µm.

La nouvelle solution technique selon l'invention présente un intérêt important par rapport à celle du document FR 2 624 531 A précité. En effet, l'additif micronisé selon la technique ancienne a une répartition granulométrique favorable à sa fixation mécanique dans la texture fibreuse (rétention supérieure à 90%), mais il n'a subi aucun traitement chimique anionique, cationique ou thermique et n'a donc aucune affinité ionique avec les fibres de cellulose et/ou les matières organiques hydrodispersables contenues dans les eaux blanches. On sait par ailleurs que cet additif de faible surface spécifique physique et hydraulique, offre de nombreux avantages pour la fabrication des papiers et cartons (amélioration des profils travers de la feuille, accélération de l'égouttage et du séchage, augmentation de l'épaisseur, de la porosité...) mais ne permet pas la fixation des substances organiques contenues dans les eaux des fabrications quand on utilise des fibres de récupération, n'a donc aucun effet sur la diminution des dépôts et des encrassements sur machines liés à la présence de substances dissoutes ou hydrodispersées sous forme de très petites particules qui peuvent avoir des tailles inférieures à 5 µm formant des colloïdes soit anioniques soit non ioniques. Les colloïdes anioniques et non ioniques s'agglomèrent et forment des dépôts collants dans la partie humide de la machine à papier et en sècherie.

L'activation thermique préalable de l'additif végétal, à elle seule, peut être déjà utile pour la fabrication de papiers contenant des fibres recyclées car elle se traduit par une efficacité 100 fois supérieure du pouvoir d'adsorption de l'additif végétal, et a donc un effet favorable sur la fixation des substances organiques contaminantes contenues dans les eaux. A titre indicatif la surface spécifique physique mesurée avec un porosimètre au mercure peut varier selon la durée du traitement et la température, de 10 à 200 g/m². Il est toutefois préférable de combiner l'action thermique et chimique pour une efficacité maximale de l'effet positif sur la réduction des encrassements sur machine.

Le système végétal selon l'invention, qui comprend l'additif végétal micronisé et activé, ou «complexe dual», est un support de rétention des substances contaminantes organiques contenues dans les eaux et éliminées dans la masse du papier et du carton qu'il soit mono-ou multi-jets avec diminution des dépôts dans les circuits et sur les habillages (toiles et feutres de presses et de sécheurs). Selon l'invention, les contaminants sont piégés dans la masse au cours de la formation du papier ou carton et ne se redéposent pas sur les habillages de la machine à papier ou carton.

Cette nouvelle matière végétale micronisée activée combine les avantages déjà obtenus avec l'additif micronisé de la technique ancienne, à savoir l'amélioration de la qualité du papier-carton (formation de la feuille, réduction des dispersions des profils, augmentation de la main), un gain de productivité par l'accélération de l'égouttage et du séchage, d'une part, à ceux de l'effet de diminution des encrassements sur machine, d'autre part. Les deux effets, activation thermique et chimique peuvent être combinés ou non. Cette technologie peut être particulièrement avantageuse pour la fabrication de feuilles pour carton ondulé qui affichent des taux d'arrêts élevés compte tenu de la forte contamination des eaux du procédé provoquant des encrassements et des arrêts fréquents pour nettoyage.

Dans le procédé de préparation du système végétal selon l'invention, comme indiqué plus haut, l'additif végétal micronisé est mis en suspension dans de l'eau, puis associé à ladite substance polymère cationique, le mélange en suspension résultant étant introduit dans la suspension fibreuse pouvant contenir des fibres recyclées. En variante, l'additif végétal micronisé est mélangé à sec avec la substance polymère cationique, avant la mise en suspension du produit résultant dudit mélange dans la suspension fibreuse pouvant contenir des fibres recyclées.

Dans le procédé de préparation du système végétal selon l'invention, on recommande de soumettre l'additif végétal micronisé (i) à un traitement thermique avec de la vapeur sèche entre 100 et 180° C pour augmenter sa surface spécifique avant son association avec la substance polymère cationique, et/ou (ii) à un traitement préalable de blanchiment avant son association avec la substance polymère cationique.

On préconise enfin un procédé pour la fabrication d'une feuille de papier ou carton caractérisé en ce qu'il comprend l'incorporation d'un système végétal selon l'invention dans la suspension de fibres selon un rapport pondéral système/fibres compris entre 0,2/100 et 30/100, de préférence un rapport pondéral compris entre 0,5/100 et 10/100.

Sans sortir du cadre de l'invention, l'on peut incorporer dans le système végétal un ou plusieurs produits choisis parmi les tensioactifs non ioniques, les émulsifiants, les colloïdes (notamment la silice colloïdale) et leurs mélanges.

### MEILLEUR MODE

Le mode préféré pour mettre en oeuvre l'invention consiste à réaliser un traitement thermique, avec de la vapeur sèche" préférentiellement après la micronisation de l'additif végétal et avant son conditionnement (en sac, en semi vrac, vrac ou en balle compressée) et la livraison à l'utilisateur final.

La substance polymère cationique peut être soit directement injectée dans l'additif végétal après la micronisation de celui-ci, à une humidité inférieure à 30 % et notamment inférieures à 20 %, en faisant notamment appel à une technique connues de pulvérisation ou en discontinu dans un cuvier contenant l'additif végétal micronisé en suspension dans l'eau. Cette opération peut être également réalisée en continu dans les circuits de tête de la machine à papier.

L'additif végétal micronisé écru ou blanchi, de granulométrie se situant entre 10 et 500 µm et de préférence entre 10 et 350 µm, est préalablement mis en suspension à une concentration comprise entre 0,05 et 10 % (en poids par rapport au poids des fibres) dans un cuvier de délitage ou un pulpeur sous faible agitation pour éviter les mousses, avant d'être introduit dans la suspension de fibres contenant les fibres recyclées. Cette opération peut s'effectuer en continu dans les eaux blanches en amont de la pompe de mélange avant l'introduction de l'additif végétal micronisé activé, dans la suspension fibreuse. La substance polymère cationique est introduite dans l'additif végétal à la dose préférentielle de 0,05 à 5 kg en poids et de préférence à la dose de 0,1 à 2 kg par tonne d'additif végétal micronisé. La dose de polymère peut être variable selon les qualités de fibres, des eaux de process et de la composition fibreuse. Le meilleur mode opératoire de mise en oeuvre de l'invention est présenté dans les figures 1 et 2 qui sont très explicites.

Le complexe dual a un effet immédiat sur l'amélioration des profils travers de la feuille, sur l'accélération de l'égouttage et du séchage et sur la diminution des dépôts sur machine. La charge polluante dans les eaux blanches peut être aisément contrôlée par la mesure du potentiel Zeta des eaux de fabrication et notamment avec des technologies performantes développées par la société dite MUTEK-BTG. La diminution de la contamination des habillages peut être également analysée par le "test de colmatage" mis au point au CTP (Centre Technique du Papier) avec une toile de machine trempée dans des eaux blanches (régulation de température). La toile est lavée très légèrement puis séchée à température ambiante. Une analyse d'image permet de mesurer l'état du colmatage de la toile et de confirmer l'efficacité de la présente invention.

D'autres avantages et caractéristiques de l'invention seront mieux compris à la lecture qui va suivre d'exemples nullement limitatifs mais fournis à titre d'illustration.

### Exemple 1

L'additif végétal est obtenu à partir de sciure de bois de hêtre après broyage-micronisation à une humidité inférieure à 20 % (à 23 °C) pour l'obtention d'une granulométrie se situant entre 10 et 350 µm. Cet additif végétal a été utilisé dans les essais visés dans le Tableau 1, ci-après.

Plus précisément, ledit Tableau 1 donne, d'une part, les quantités des divers ingrédients utilisés et, d'autre part, les résultats des expérimentations effectuées avec un papier ondulé de 112 g/m² standard obtenu (a) sans l'additif végétal (témoin), (b) avec ledit additif végétal conformément à l'enseignement de FR 2 624531 A, et (c) avec ledit additif végétal activé selon l'invention. Le Tableau 1 montre donc l'impact de l'activation dudit additif végétal selon la présente invention (activation avec la substance polymère cationique directement injectée par pulvérisation sur l'additif végétal après micronisation ou activation par introduction de ladite substance polymère cationique dans l'additif végétal en suspension dans l'eau) sur les propriétés physiques et les avantage potentiels en ce qui concerne la diminution des encrassements sur machine.

L'utilisation du système de l'invention est favorable à une baisse de la teneur en sulfates (de 500 à 200 fois) et en chlorures. La demande ionique devrait avoisiner 0 mV ou être légèrement positive. La conductivité dans les eaux blanches serait en baisse. Ces résultats prévisionnels devraient permettre une meilleure marche de la machine avec une baisse des encrassements.

Dans le Tableau 1,
● le total des fibres représente 100 % en poids, et les quantités des autres ingrédients sont exprimées en pourcentage en poids par rapport au poids total des fibres ;
● le terme «Vemissa» désigne de façon générique l'additif végétal, «Vemissa standard» étant l'additif végétal conforme à l'enseignement de FR 2 624 531 A, et «Vemissa activé» étant l'additif végétal associé à la substance polymère cationique selon la présente invention.

**TABLEAU 1**

| Exemple de fabrication de papier pour ondulé 112 g/m² avec l'additif Vemissa et effet de l'activation par la nouvelle technologie | | | |
|---|---|---|---|
| | Témoin | Essai avec Vemissa standard | Essai avec Vemissa activé (résultats prévisionnels) |
| | | | |
| Gros de magasin recyclée (%) | 30 | 30 | 30 |
| Caisses carton recyclées (%) | 70 | 70 | 70 |
| Fécule Mylplus P45 L- DS = 0,045 (%) | 0,45 | 0,45 | 0,45 |
| Additif Vemissa standard E 150 (%) | 0 | 3 | 0 |
| Polyacrylamide cationique - Retaminol 11 NS (Kg/T) | 0,6 | 0,6 | 0,1 |
| Nouvel addif Vemissa activé (%) | 0 | 0 | 3 * |
| Précationisation avant introduction dans la pâte (%) | 0 | 0 | 0,4 |
| Size press (amidon de blé) - concentration (%) | 7 - 7,5 | 7 - 7,5 | 7 - 7,5 |
| Production (tonne/jour) | 32,5 | 33,1 | 33,1 |
| Vitesse machine enrouleur (m/mn) | 640 | 642 | 642 |
| Caractéristiques physiques | | | |
| | | | |
| Grammage (g/m²) | 112 | 111,5 | 112 |
| Épaisseur (microns) | 183 | 186 | 186 |
| Main cm3/g | 1,63 | 1,67 | 1,66 |
| Porosité Gurley (s) | 64,5 | 50 | 50 |
| Dropt test (s) | 210 | 145 | 150 |
| Rupture (N) | 101 | 104 | 106 |
| Allongement (%) | 2,2 | 2,2 | 2,2 |
| Clivage (Kpa) | 1536 | 1610 | 1600 |
| SCT / ST (kN/m) | 1,96 | 1,95 | 1,97 |
| CMT 30 (N) | 193 | 192 | 193 |
| Indice mullen | 2,3 | 2,2 | 2,3 |
| Cendres (%) | 13,5 | 12,4 | 12,5 |
| Écart type grammage | 2,43 / 1,25 | 2,28 / 1,21 | 2,20 / 1,20 |
| | | | |
| Contrôle des eaux | | | |
| | | | |
| DCO moyenne | 1482 | 1470 | Voir commentaires |
| pH | 6,49 | 6,65 | ci-dessous |
| Conductivité | 1890 | 2010 | |
| Potentiel Redox mv | -150 | -200 | |
| TH ppm CaCO³ | 1400 | 1200 | |
| CaH | 1350 | 1080 | |
| TAC | 1360 | 1080 | |
| SO₄² | 550 | 500 | |
| Cationicité Mütek eaux blanches mv | 4,1 | 4,8 | |
| Cationicité Mütek caisse de tête mv | 3,12 | 4 | |
| cl - (ppm cl⁻) | 438 | 316 | |
| | | | |

L'introduction du nouvel additif activé est favorable à une baisse de la teneur en sulfates (de 500 à 200), en chlorures. la demande ionique devrait avoisiner 0 mv ou être légèrement positive. Conductivité dans les eaux blanches en baisse. Les avantages obtenus avec additif Vemissa se retrouvent avec ce nouveau produits.

Ces résultats prévisionnels devraient permettre une meilleure marche de la machine avec une baisse des encrassements des habillages.

### Exemple 2

L'additif végétal est de la sciure de bois micronisé pour l'obtention d'une granulométrie variable entre 10 et 350 µm. L'additif végétal micronisé est soumis à un traitement thermique avec de la vapeur sèche à 130 - 180 °C pour augmenter la surface spécifique physique de 10 à 200 g/m². L'additif ainsi traité est préparé à une concentration variable entre 5 et 10 % dans un mélangeur de tête avant d'être incorporé dans la suspension fibreuse selon la Fig. 1 mais sans traitement préalable de l'additif végétal micronisé avec une substance polymère cationique.

L'effet sur la décontamination est moins prononcé mais cette activation représente un progrès certain pour la diminution des encrassements des habillages par rapport à une composition standard.

### Exemple 3

L'activation cationique est obtenue avec une substance polymère cationique, qui est un adduct de dicyandiamide et de formaldéhyde à la dose de 1 à 1,5 kg par tonne de bois de sapin micronisé de granulométrie comprise entre 10 et 350 µm. Cette activation est directement obtenue par injection du mélange de polymères par pulvérisation dans l'additif végétal après micronisation. L'activation permet de réduire la turbidité des eaux et la déposition de 0,020 environ à 0,010 mg environ de stickies par feuille, soit environ une diminution des encrassements de 40 % par rapport aux procédés papetiers avec agents de rétention ou fixateurs chimiques classiques.

### Exemple 4

L'additif végétal micronisé est préalablement blanchi suivant une technique de blanchiment classique de la papeterie afin d'obtenir une blancheur variable entre 70 et 75°. L'additif végétal micronisé est activé selon les conditions de l'exemple 3 et introduit dans une suspension fibreuse constituée de 100 % en poids de pâte désencrée pour la fabrication de papier journal et magazine. Cette opération se traduit par la réduction des dépôts de 0,018 à 0,013 mg de stickies par feuille soit environ une diminution des encrassements de 27%.

### Exemple 5

On procède comme indiqué à l'exemple 4, avec la différence que l'activation de la poudre de bois de sapin, réalisée avec une substance polymère cationique qui est le même adduct de dicyandiamine avec le formaldéhyde (1kg/tonne d'additif végétal micronisé), est effectuée en présence d'un émulsifiant et de silice colloïdale (granulométrie : 5 nm).

On réalise des formettes. Pour la déposition, une feuille d'aluminium de 10 cm x 10 cm est placée en contact avec une formette au séchage à 100 °C sous un poids constant pendant 2 minutes. La feuille d'aluminium est ensuite séparée de la formette et les «stickies» collés sur cette feuille d'aluminium sont extraits au tétrahydrofurane (THF) et analysés par HPLC-SEC avec détecteur ELS. Les valeurs obtenues (moyenne de 7 essais par système végétal testé) montrent que la déposition de stickies est réduite de 30 % par rapport au témoin obtenu avec le même additif végétal sans la substance polymère cationique mais avec les même agents de rétention (émulsifiant et silice colloïdale).

## Revendications

1. Système pour la diminution des dépôts, des encrassements et des casses au cours de la fabrication de papiers et cartons, notamment lorsque cette fabrication met en oeuvre des fibres recyclées ou un mélange de fibres papetières et de fibres recyclées, ledit système étant **caractérisé en ce qu'**il comprend un additif végétal micronisé préalablement associé à une substance polymère choisie parmi l'ensemble constitué par les polymères cationiques, les copolymères cationiques et leurs mélanges, la dite substance polymère appartenant à la famille des polyacrylamides, polyamines, polyéthylèneimines, produits d'addition de dicyandiamide et de formaldéhyde et/ou d'oxyde d'éthylène et leurs mélanges, ledit système étant destiné, lors de la fabrication de papiers et cartons, à être introduit en suspension aqueuse dans la suspension de fibres.

2. Système selon la revendication 1, **caractérisé en ce que** ladite substance polymère a une masse moléculaire moyenne comprise entre 10 000 et 800 000 et intervient à une teneur comprise entre 0,05 et 5 kg/tonne d'additif végétal micronisé, de préférence une teneur de 0,1 à 2 kg/tonne d'additif végétal micronisé.

3. Système selon la revendication 1 ou 2, **caractérisé en ce que** il a été obtenu par traitement de l'additif végétal micronisé et ayant une teneur en humidité inférieure à 30 % et de préférence inférieure à 20 %, au moyen d'une substance polymère cationique sous agitation.

4. Système selon la revendication 3, **caractérisé en ce que** l'additif végétal micronisé est mélangé à sec avec la substance polymère cationique, avant l'introduction du produit résultant dudit mélange dans la suspension fibreuse pouvant contenir des fibres recyclées.

5. Système selon la revendication 3 **caractérisé en ce que** l'additif végétal micronisé a été mis en suspension dans de l'eau, puis associé à ladite substance polymère, le mélange en suspension résultant étant introduit dans la suspension fibreuse pouvant contenir des fibres recyclées.

6. Système selon l'une quelconque des revendications 1 à 5, **caractérisé en ce que** l'additif végétal est
de la poudre de bois micronisée provenant de résineux et/ou de feuillus, de la poudre de déchets de bois,
de la poudre de sous-produits de l'exploitation agricole, notamment celle de céréales, ou
un de leurs mélanges,
et a une granulométrie moyenne comprise entre 10 et 500 µm, de préférence une granulométrie moyenne comprise entre 10 et 350 µm.

7. Système selon l'une quelconque des revendications 1 à 6 **caractérisé en ce que** l'additif végétal micronisé a été soumis à un traitement préalable de blanchiment avant son association avec la substance polymère cationique.

8. Système selon l'une quelconque des revendications 1 à 7 **caractérisé en ce que** l'additif végétal micronisé a été soumis à un traitement thermique avec de la vapeur sèche entre 100 et 180° C pour augmenter sa surface spécifique avant son association avec ladite substance polymère cationique.

9. Procédé de préparation d'un système suivant l'une quelconque des revendications 1 à 8, ledit procédé étant **caractérisé en ce qu'**il comprend le traitement de l'additif végétal micronisé et ayant une teneur en humidité inférieure à 30 % et de préférence inférieure à 20 %, par mélange avec une substance polymère cationique sous agitation, la dite substance polymère cationique étant choisie parmi l'ensemble constitué par les polymères cationiques, les copolymères cationiques et leurs mélanges, la dite substance polymère cationique appartenant à la famille des polyacrylamides, polyamines, polyéthylèneimines, produits d'addition de dicyandiamide avec le formaldéhyde et/ou l'oxyde d'éthylène et leurs mélanges.

10. Procédé suivant la revendication 9, **caractérisé en ce que** l'additif végétal micronisé est mis en suspension dans de l'eau, puis associé à ladite substance polymère cationique, le mélange en suspension résultant étant introduit dans la suspension fibreuse pouvant contenir des fibres recyclée.

11. Procédé suivant la revendication 9 ou 10, **caractérisé en ce que** l'additif végétal est de la poudre de bois micronisée provenant de résineux et/ou de feuillus et a une granulométrie moyenne comprise entre 10 et 500 µm, de préférence une granulométrie moyenne comprise entre 10 et 350 µm.

12. Procédé suivant l'une quelconque des revendications 9 à 11 **caractérisée en ce que** l'additif végétal micronisé a été soumis à un traitement préalable de blanchiment avant son association avec la substance polymère cationique.

13. Procédé selon l'une quelconque des revendications 9 à 12 **caractérisé en ce que** l'additif végétal micronisé a été soumis à un traitement thermique avec de la vapeur sèche entre 100 et 180° C pour augmenter sa surface spécifique avant son association avec la substance polymère cationique.

14. Utilisation d'un système selon l'une quelconque des revendications 1 à 8, **caractérisée en ce que** l'on fait appel à un dit système pour la réduction des dépôts, encrassements et casses sur machine de production des papiers et cartons pouvant contenir des fibres recyclées et notamment des papiers pour ondulés, des papiers LWC, par adsorption et fixation des substances organiques, qui sont dissoutes ou hydrodispersées, et/ou des stickies dans les eaux de fabrication.

15. Utilisation suivant la revendication 14, **caractérisé en ce que** l'additif végétal micronisé provient de sous-produits de la production agricole.

16. Procédé pour la fabrication d'une feuille de papier ou carton **caractérisé en ce qu'**il comprend l'incorporation d'un système selon l'une quelconque des revendications 1 à 8 dans la suspension de fibres selon un rapport pondéral système/fibres compris entre 0,2/100 et 30/100, de préférence un rapport pondéral compris entre 0,5/100 et 10/100.

## Claims

1. A system for reducing deposits, clogging and breaks during the manufacture of papers and boards, especially when this manufacture uses recycled fibres or a mixture of paper fibres and of recycled fibres, said system being **characterized in that** it comprises a micronized plant additive previously combined with a polymer substance chosen from the group consisting of cationic polymers, cationic copolymers and mixtures thereof, said polymer substance belonging to the family of polyacrylamides, polyamines, polyethyleneimines, addition products of dicyandiamide and of formaldehyde and/or of ethylene oxide and mixtures thereof, said system being intended, during the manufacture of papers and boards, to be introduced as an aqueous suspension into the suspension of fibres.

2. A system according to Claim 1, **characterized in that** said polymer substance has an average molecular weight between 10 000 and 800 000 and is used at an amount of between 0.05 and 5 kg/ton of micronized plant additive, preferably an amount of 0.1 to 2 kg/ton of micronized plant additive.

3. A system according to Claim 1 or 2, **characterized in that** it was obtained by treatment of the micronized plant additive having a moisture content of less than 30% and preferably of less than 20%, using a cationic polymer substance, with stirring.

4. A system according to Claim 3, **characterized in that** the micronized plant additive is dry mixed with the cationic polymer substance, before the introduction of the product resulting from said mixing into the fibrous suspension which may contain recycled fibres.

5. A system according to Claim 3, **characterized in that** the micronized plant additive was put into suspension in water, then combined with said polymer substance, the resulting mixture in suspension being introduced into the fibrous suspension which may contain recycled fibres.

6. A system according to any one of Claims 1 to 5, **characterized in that** the plant additive is
micronized wood flour originating from softwood and/or hardwood,
wood waste flour,
flour of by-products of agricultural exploitation, especially that of cereal plants, or
a mixture thereof,
and has a mean particle size comprised between 10 and 500 µm, preferably a mean particle size comprised between 10 and 350 µm.

7. A system according to any one of Claims 1 to 6, **characterized in that** the micronized plant additive was subjected to bleaching pretreatment before being combined with the cationic polymer substance.

8. A system according to any one of Claims 1 to 7, **characterized in that** the micronized plant additive was subjected to a heat treatment with dry steam between 100 and 180°C in order to increase its specific surface area before it is combined with said cationic polymer substance.

9. A method for preparing a system according to any one of Claims 1 to 8, said method being **characterized in that** it comprises the treatment of the micronized plant additive having a moisture content of less than 30% and preferably of less than 20%, by mixing with a cationic polymer substance, with stirring, said cationic polymer substance being chosen from the group consisting of cationic polymers, cationic copolymers and mixtures thereof, said cationic polymer substance belonging to the family of polyacrylamides, polyamines, polyethyleneimines, addition products of dicyandiamide with formaldehyde and/or ethylene oxide and mixtures thereof.

10. A method according to Claim 9, **characterized in that** the micronized plant additive is put into suspension in water, then combined with said cationic polymer substance, the resulting mixture in suspension being introduced into the fibrous suspension which may contain recycled fibres.

11. A method according to Claim 9 or 10, **characterized in that** the plant additive is micronized wood flour originating from softwood and/or hardwood and has a mean particle size comprised between 10 and 500 µm, preferably a mean particle size comprised between 10 and 350 µm.

12. A method according to any one of Claims 9 to 11, **characterized in that** the micronized plant additive was subjected to bleaching pretreatment before being combined with the cationic polymer substance.

13. A method according to any one of Claims 9 to 12, **characterized in that** the micronized plant additive was subjected to a heat treatment with dry steam between 100 and 180°C in order to increase its specific surface area before being combined with the cationic polymer substance.

14. A use of a system according to any one of Claims 1 to 8, wherein said system is used for reducing deposits, clogging and breaks on a machine for producing papers and boards which may contain recycled fibres and especially papers for corrugated materials, LWC papers, by adsorption and fixation of organic substances, which are dissolved or dispersed in water, and/or stickies in process waters.

15. Use according to Claim 14, **characterized in that** the micronized plant additive originates from by-products of agricultural production.

16. A method for the manufacture of a sheet of paper or board, **characterized in that** it comprises the incorporation of a system according to any one of Claims 1 to 8 into the suspension of fibres in a system/fibres weight ratio comprised between 0.2/100 and 30/100, preferably a weight ratio comprised between 0.5/100 and 10/100.

## Patentansprüche

1. System zur Verringerung von Ablagerungen, Verstopfungen und Beschädigungen bei der Herstellung von Papier- und Pappesorten, insbesondere wenn bei dieser Herstellung Altpapier oder eine Mischung aus Zellstoff und Altpapier eingesetzt wird, wobei das System **dadurch gekennzeichnet ist, dass** es einen pflanzlichen Zusatzstoff, welcher zuvor mikronisiert wurde, in Verbindung mit einer Polymersubstanz umfasst, welche aus der Gesamtheit ausgewählt ist, die aus den kationischen Polymeren, den kationischen Copolymeren und deren Mischungen besteht, wobei die Polymersubstanz zur Familie der Polyacrylamide, Polyamine, Polyethylenimine, Additionsprodukte aus Dicyandiamid und aus Formaldehyd und/oder aus Ethylenoxid und deren Mischungen gehört, wobei das System dazu bestimmt ist, bei der Herstellung von Papier- und Pappesorten der Fasersuspension in einer wässrigen Suspension zugesetzt zu werden.

2. System nach Anspruch 1, **dadurch gekennzeichnet, dass** die Polymersubstanz eine mittlere Molmasse im Bereich von 10.000 bis 800.000 hat und derart zur Anwendung kommt, dass ihr Gehalt im Bereich von 0,05 bis 5 kg/Tonne an mikronisiertem pflanzlichen Zusatzstoff liegt, wobei der Gehalt vorzugsweise 0,1 bis 2 kg/Tonne an mikronisiertem pflanzlichen Zusatzstoff beträgt.

3. System nach Anspruch 1 oder 2, **dadurch gekennzeichnet, dass** es erhalten wurde, indem der pflanzliche Zusatzstoff, welcher mikronisiert ist und einen Feuchtigkeitsgehalt von weniger als 30 % und vorzugsweise von weniger als 20 % hat, mit einer kationischen Polymersubstanz unter Rühren behandelt wurde.

4. System nach Anspruch 3, **dadurch gekennzeichnet, dass** der mikronisierte pflanzliche Zusatzstoff im trockenen Zustand mit der kationischen Polymersubstanz vermischt wird, bevor das Produkt, welches bei dem Mischvorgang erhalten wurde, der Fasersuspension, welche Altpapier enthalten kann, zugesetzt wird.

5. System nach Anspruch 3, **dadurch gekennzeichnet, dass** der mikronisierte pflanzliche Zusatzstoff in Wasser in Suspension gebracht wurde, woraufhin er mit der Polymersubstanz in Verbindung gebracht wurde, wobei die dabei erhaltene Mischung, die in Suspension vorliegt, der Fasersuspension, welche Altpapier enthalten kann, zugesetzt wird.

6. System nach einem beliebigen der Ansprüche 1 bis 5, **dadurch gekennzeichnet, dass** es sich bei dem pflanzlichen Zusatzstoff
um mikronisiertes Holzmehl, das von Nadelbäumen und/oder von Laubbäume stammt, um Mehl aus Holzabfällen,
um Mehl aus landwirtschaftlichen Nebenprodukten, insbesondere solches aus Getreide, oder
um eine von deren Mischungen handelt,
und er eine mittlere Korngröße im Bereich von 10 bis 500 µm, vorzugsweise eine mittlere Korngröße im Bereich von 10 bis 350 µm, aufweist.

7. System nach einem beliebigen der Ansprüche 1 bis 6, **dadurch gekennzeichnet, dass** der mikronisierte pflanzliche Zusatzstoff einer bleichenden Vorbehandlung unterzogen wurde, bevor er mit der kationischen Polymersubstanz in Verbindung gebracht wird.

8. System nach einem beliebigen der Ansprüche 1 bis 7, **dadurch gekennzeichnet, dass** der mikronisierte pflanzliche Zusatzstoff einer Wärmebehandlung mit Trockendampf zwischen 100 und 180 °C unterzogen wurde, um seine spezifische Oberfläche zu erhöhen, bevor er mit der kationischen Polymersubstanz in Verbindung gebracht wird.

9. Verfahren zur Herstellung eines Systems nach einem beliebigen der Ansprüche 1 bis 8, wobei das Verfahren **dadurch gekennzeichnet ist, dass** es die Behandlung des pflanzlichen Zusatzstoffs, welcher mikronisiert ist und einen Feuchtigkeitsgehalt von weniger als 30 % und vorzugsweise von weniger als 20 % aufweist, durch Vermischen mit einer kationischen Polymersubstanz unter Rühren umfasst, wobei die kationische Polymersubstanz aus der Gesamtheit ausgewählt ist, die aus den kationischen Polymeren, den kationischen Copolymeren und deren Mischungen besteht, wobei die Polymersubstanz zur Familie der Polyacrylamide, Polyamine, Polyethylenimine, Additionsprodukte von Dicyandiamid und Formaldehyd und/oder Ethylenoxid und deren Mischungen gehört.

10. Verfahren nach Anspruch 9, **dadurch gekennzeichnet, dass** der mikronisierte pflanzliche Zusatzstoff in Wasser in Suspension gebracht wird, woraufhin er mit der kationischen Polymersubstanz in Verbindung gebracht wird, wobei die dabei erhaltene Mischung, die in Suspension vorliegt, der Fasersuspension zugesetzt wird, welche Altpapier enthalten kann.

11. Verfahren nach Anspruch 9 oder 10, **dadurch gekennzeichnet, dass** es sich bei dem pflanzlichen Zusatzstoff um mikronisiertes Holzmehl handelt, das von Nadelbäumen und/oder Laubbäumen stammt und eine mittlere Korngröße im Bereich von 10 bis 500 µm, vorzugsweise eine mittlere Korngröße im Bereich von 10 bis 350 µm, hat.

12. Verfahren nach einem beliebigen der Ansprüche 9 bis 11, **dadurch gekennzeichnet, dass** der mikronisierte pflanzliche Zusatzstoff einer bleichenden Vorbehandlung unterzogen wurde, bevor er mit der kationischen Polymersubstanz in Verbindung gebracht wird.

13. Verfahren nach einem beliebigen der Ansprüche 9 bis 12, **dadurch gekennzeichnet, dass** der mikronisierte pflanzliche Zusatzstoff einer Wärmebehandlung mit Trockendampf zwischen 100 und 180 °C unterzogen wurde, um seine spezifische Oberfläche zu erhöhen, bevor er mit der kationischen Polymersubstanz in Verbindung gebracht wird.

14. Verwendung eines Systems nach einem beliebigen der Ansprüche 1 bis 8, **dadurch gekennzeichnet, dass** ein solches System zur Anwendung kommt, um Ablagerungen, Verstopfungen und Beschädigungen an Maschinen zur Herstellung von Papier- und Pappesorten, die Altpapier enthalten können, und insbesondere von Papiersorten für Wellpappe, von LWC-Papier dadurch zu verringern, dass organische Substanzen, die gelöst oder im Wasser dispergiert sind, und/oder Stickies aus dem Herstellungswasser adsorbiert und fixiert werden.

15. Verwendung nach Anspruch 14, **dadurch gekennzeichnet, dass** der mikronisierte pflanzliche Zusatzstoff aus landwirtschaftlichen Nebenprodukten stammt.

16. Verfahren zur Herstellung einer Bahn aus Papier oder Pappe, **dadurch gekennzeichnet, dass** es das Beimischen eines Systems nach einem beliebigen der Ansprüche 1 bis 8 in die Fasersuspension gemäß einem System/Fasern-Gewichtsverhältnis im Bereich von 0,2/100 bis 30/100, vorzugsweise einem Gewichtsverhältnis im Bereich von 0,5/100 bis 10/100, umfasst.
